# EUROPEAN PATENT SPECIFICATION

(11) **EP 3 264 346 B1**
(45) Date of publication and mention of the grant of the patent: **24.12.2025**
(21) Application number: 17178786.4
(22) Date of filing: 29.06.2017
(51) Int. Cl.: G06Q 10/08

(54) **PROCESSING CONSIGNMENTS IN A PICK-UP AND DELIVERY NETWORK ON THE BASIS OF WEIGHT AND VOLUME INFORMATION**
VERARBEITUNG VON SENDUNGEN IN LADE- UND VERTRIEBSNETZEN AUF BASIS VON GEWICHT- UND VOLUMENINFORMATIONEN
TRAITEMENT DE CHARGEMENTS DANS UN RÉSEAU DE RAMASSAGE ET DE LIVRAISON SUR LA BASE D'INFORMATIONS DE POIDS ET DE VOLUME

(30) Priority: 29.06.2016 NL 1041965
(43) Date of publication of application: 03.01.2018
(73) Proprietor: TNT Holdings B.V., 2132 LS Hoofddorp (NL)
(72) Inventor: Ree, Maarten Sicco Dirk, 2132 LS Hoofddorp (NL)
(74) Representative: Fish & Richardson P.C.

(56) References cited:
- EP-A1- 1 443 312
- EP-A2- 1 240 092
- WO-A1-2007/122221
- WO-A1-98/33729
- WO-A2-2014/205273
- DE-A1- 102007 038 836
- JP-A- 2002 048 624
- US-A- 3 935 913
- US-A1- 2007 237 356
- US-A1- 2012 150 342
- US-A1- 2014 048 383

## Description

### FIELD OF THE INVENTION

The invention relates to processing consignments in a pick-up and delivery (PUD) network on the basis of weight and volume information, and, in particular, though not exclusively, to methods and systems for processing consignments in a pick-up and delivery network on the basis of weight and volume information that is generated at different consignment processing locations, e.g. hubs, in the PUD network and computer program product for executing such methods.

### BACKGROUND OF THE INVENTION

In the past decade, the growth of pick-up and delivery (PUD) networks for delivery of mail pieces by service providers from an origin address OA to a destination address DA has rapidly increased and is expected to increase further due to phenomena such as online shopping. Mail pieces include letters, small objects, medium size objects and large objects. One or more mail pieces may constitute a consignment.

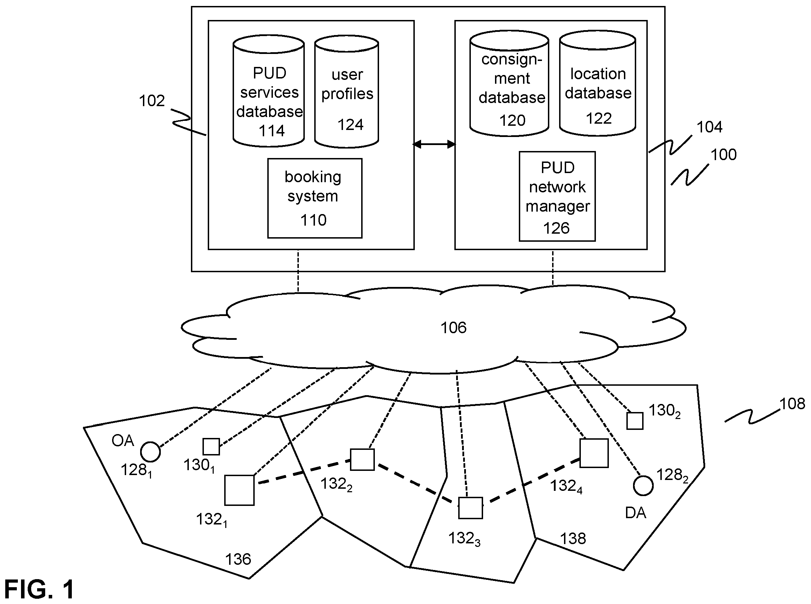

**Fig. 1** depicts PUD system comprising a PUD network **108** connected via a network **106** to a network management system **100** including a front-end system **102** and a back-end system **104.** The PUD network **108** comprises several network stations **132₁₋₄,** e.g. depots and hubs, through which the mail pieces are routed to arrive at a destination address DA. Each PUD network is associated with a service area. Physical transport of the mail pieces between network stations is conducted using trucks, aircrafts and other delivery vehicles. PUD networks may span wide areas, e.g. continents, and may contain tens of hubs and hundreds to thousands of depots.

Often, an agreed delivery time applies for the delivery of the consignment. Service providers typically offer several service levels, such as economy delivery and express delivery, for which different delivery times (and delivery costs) apply to convey a consignment from an origin address through the PUD network to the destination address. Service providers may convey millions of consignments through the PUD network each week. Obviously, the routing of the consignments through the network must be managed within such delivery networks in order to efficiently route the consignments through the PUD network while meeting agreed delivery times.

Customers, seeking the delivery service of a service provider provide shipment information to the computer system of the service provider by means of a delivery order. The front-end system **102** may process delivery orders from customers contacting the system via a booking system **110** which may be accessed via a user interface, e.g. a web-interface, For example, a customer may use a customer terminal **128₁₋₄,** e.g. a computer, in order to fill in a delivery order form listing several possible PUD services. The booking system may connect to a PUD services database **114** in order to retrieve service information (maximum weight, maximum dimensions, delivery times, etc.) for each of the PUD services. The booking system may further use a user profile database **124** in order to retrieve information about the customer requesting a delivery order.

The shipment information includes the required service level, the origin address, the destination address and may contain physical characteristics, most notably the weight and volume of the mail piece(s) of the consignment. In order to monitor (e.g. track) and manage the flow of consignments through the network, the mail pieces are provided with a marking (e.g. an identifier, typically a bar code), which is registered with the network by scanning a code that is attached to the piece. Information on the consignment may be linked to the marking and stored in a consignment database. The physical characteristics (weight and dimensions) of the consignment are initially used for determining a price that is billed to a customer.

Once a delivery order accepted, the delivery process is further handled by the back-end **104** comprising a PUD network manager **126** that is connected to the computers in the hub and depots and to mobile terminals of drivers who are transporting the consignments from the origin address to an origin depot or from a destiny depot to a destiny address. The PUD network manager is further connected to a consignment database comprising the shipment information and to a location database comprising the locations of the hubs and depots of the PUD network.

Each time a consignment arrives at a depot or leaves the depot, the marking is scanned, typically using a hand scanner, such that the PUD network manager recognizes the ID and is informed about the current location of the mail piece in the delivery network. The current location of the mail piece may be stored in the location database. Hence, consignments are registered with the PUD network when they enter the PUD network on the basis of shipment information provided by the customers. Thereafter the consignment is transported through the PUD network to the destination address. At certain times the PUD network manager will receive a depot location where the consignment has been detected but for the rest is the transport of the consignment through the network a black box process for the network management system thereby seriously limiting the possibilities to control, optimize and improve the delivery services.

For example, billing based on the shipment information of the customer however if it shipment information (weight, dimensions, appearances, etc.) often deviates from the actual physical state. Furthermore, the physical state of consignment may change (e.g. damage, modifications due to repackaging, etc.) during the transportation through the PUD network. Such events will have a substantial influence on the accuracy of the planning process thus leading to sub optimal services. Moreover, the shape of a consignment, e.g. a non-stackable pallet, may influence the efficiency of loading a truck with a certain amount of consignments.

Due to the fact that a PUD service provider does not have an accurate overview of the physical status of consignments in the PUD network, it is not possible to execute accurate network capacity planning, contingency planning (both at the level of a depot or hub and at the level of the PUD network) and ultimately rating and invoicing. Hence, as the foregoing illustrates, there is a need in the art for improved methods and systems for processing consignments in a PUD network.

US 2012/150342 A1 discloses a system for processing delivery items. The system includes a delivery item transfer device which transfers a delivery item put into the system and measures at least one delivery item information selected from the group consisting of an image, a bar code, an address, a shape, a volume, and a weight of the delivery item, a control device which generates sorting information for each delivery zone and delivery route information, which are required to deliver the delivery items, and provides the generated sorting information for each delivery zone or delivery route information and the at least one delivery item information, and a robot device which loads the delivery item into a corresponding loading container by controlling a robot based on the generated sorting information for each delivery zone or delivery route information and the at least one delivery item information.

WO 2007/122221 A1 discloses a method for processing inspection data for a freight container that comprises making an image of the container, compressing a digital file containing said image, and storing the image data in a database. The image data is processed to resolve the parts of the image into lines or graphic elements for automatic analysis of a container view to determine visible damage.

JP 2002 048624 A discloses a metering apparatus that comprises a conveyor member which drives an object that is placed on a balance member in the conveyance route of the conveyance conveyors. A balancing part which is higher than, and parallel to, the conveyance face of the conveyance conveyors is installed in the center on the conveyance face of the conveyance member. The metering apparatus further comprises an indicating instrument to which a weight-value signal is transmitted by the balance member.

US 3 935 913 A discloses a platform weighing scale in which a reinforced load cell-supported platform structure has a frame-like reinforcement cooperating with a load-receiving deck or platform to define a torsion box frame which resists load-induced deflection of the platform between spaced apart load cell support points.

EP 1 443 312 A1 discloses a method for operating an optical sensor for measuring a physical value of an object whereby the measurement precision is dependent on operating conditions. The precision, or minimum measurement unit, of the measurements can be varied dependent on the operating conditions. For example, if measurements of objects are being carried out on a conveyor belt then the precision or the scale unit is set according to the speed of the belt.

US 2007/237356 A1 discloses a parcel imaging system that includes means for transporting parcels and image sensors oriented to image the parcels. An image construction subsystem is configured to stitch together outputs of the image sensors to produce at least one two-dimensional images of a parcel, and to construct, using the at least one two-dimensional image, at least one displayable three-dimensional image of the parcel.

DE 10 2007 038836 A1 discloses a device for processing articles, wherein the articles have optically detectable information on at least one side. The articles are separated on a conveyor section by the device and transported to a reading device, where the information is detected from all sides of the articles.

EP 1 240 092 A2 discloses a conveying system which can eject packages to either side of a conveyor path onto designated output chutes, bins or subsequent conveyors under a particular means of control. This control provides a means for speeding up the sorting conveyor when there is no unloading or loading occurring.

WO 98/33729 A1 discloses a sorting apparatus operative to selectively discharge articles, such as parcels, from a tilted, gated conveyor to a desired output destination. A powered roller is mounted along the top of the gates so that when a gate is lowered to discharge a parcel, the parcel engages the powered roller and is drawn off the conveyor. The gate can be raised before the parcel has completely left the conveyor.

WO 2014/205273 A2 discloses systems and methods of processing items. Items in a distribution network or process may be scanned at every handling point in the distribution network, and each scan is recorded in a central repository. The scan information can be used to generate real-time access to data, analytical tools, predictive tools, and tracking reports.

### SUMMARY OF THE INVENTION

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It is an objective of the invention to reduce or eliminate at least one of the drawbacks known in the prior art. The invention is set out in the appended set of claims.

The present invention will further be illustrated with reference to the attached drawings, which schematically show various embodiments according to the present invention. It will be understood that the present invention is not in any way restricted to these specific embodiments. Moreover, combinations of any of the embodiments and limitations are envisioned by the disclosure.

### BRIEF DESCRIPTION OF THE DRAWINGS

Aspects of the invention will be explained in greater detail by reference to exemplary embodiments shown in the drawings, in which:
**Fig. 1** depicts a schematic of a PUD network.
**Fig. 2** depicts part of a PUD system.
**Fig. 3** depicts a schematic of a scanning system for conveyable consignments according to an embodiment of the invention.
**Fig. 4** depicts a schematic of scanning process using a scanning system according to an embodiment of the invention.
**Fig. 5** provides a schematic of a data processing system operable to implement one or more aspects of the present invention.

### DETAILED DESCRIPTION OF THE DRAWINGS

The invention aims to monitor and control processes in the depots and hubs and the processes in a PUD network on the basis of measured physical characteristics of the consignments that enter and leave the depots and hubs. The physical characteristics (weight, volume, dimensions, shape, images) are measured on the basis of special high-throughput weight and volume scanning systems (hereafter referred to as scanning system) that are installed at the entrance of hubs and depots of the PUD network. Each scanning system is adapted for both weighting and determining the volume and/or dimensions of a consignment. In some embodiments, the scanning system may also configured to determine images of different sides of a consignment. Each scanning system measures the weight and volume of a consignment, identifies the consignment by determining a code, e.g. a bar code or QR code representing an consignment identifier, in at least one of the images of the consignment and sent this information to the network management system of the PUD network

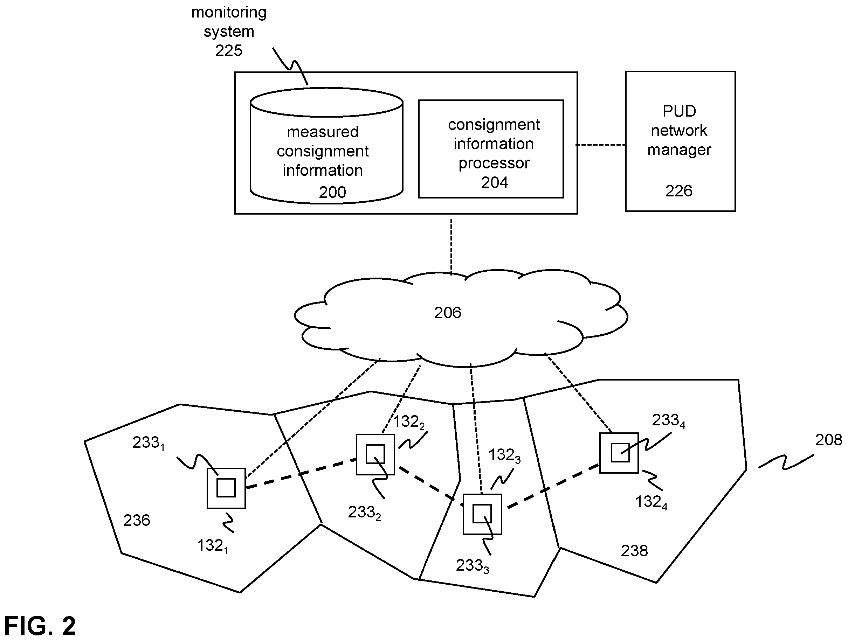

**Fig. 2** depicts part of a PUD system. In particular, **Fig. 2** depicts a PUD system that is similar to the PUD system as described with reference to **Fig. 1****. In** **Fig. 2** however, the PUD system comprises a monitoring system **225** coupled to the PUD network manager **226.** The monitoring system is coupled via the network **206** to at least one scanning system **233₁₋₄** that are located in the hubs and/or depots **232₁₋₄** of the PUD network **208.**

Each depot or hub comprises at least one at least one scanning system for registering and monitoring the measured characteristics such as the weight, volume and shape of consignments at the input (and optionally the output). This information is referred to as the measured consignment information. The measured consignment information, such as the weight, volume and dimensions, of each consignment (identified by a consignment ID, e.g. a bar code or a QR code) generated by a scanning system at a particular geographical location is transmitted via a communications network **206** to a network management system of the PUD system where it is processed by the monitoring system. The measured consignment information may be stored in a measured consignment information database **203** and linked on the basis of the consignment ID to other information regarding the consignment, e.g. customer shipping information, in the consignment database **102** and location information in the location database **122.** Hence, the consignment and location database receive measured consignment information such as the weight and volume of the consignment for different locations (hub and depot locations) in the PUD network. This way, the physical constitution of the consignment can be monitored during the PUD process. A consignment information processor **204** is configured to monitor the measured consignment information in time and if deviations and/or changes in the measured consignment information is determined, the consignment information processor may trigger an appropriate action.

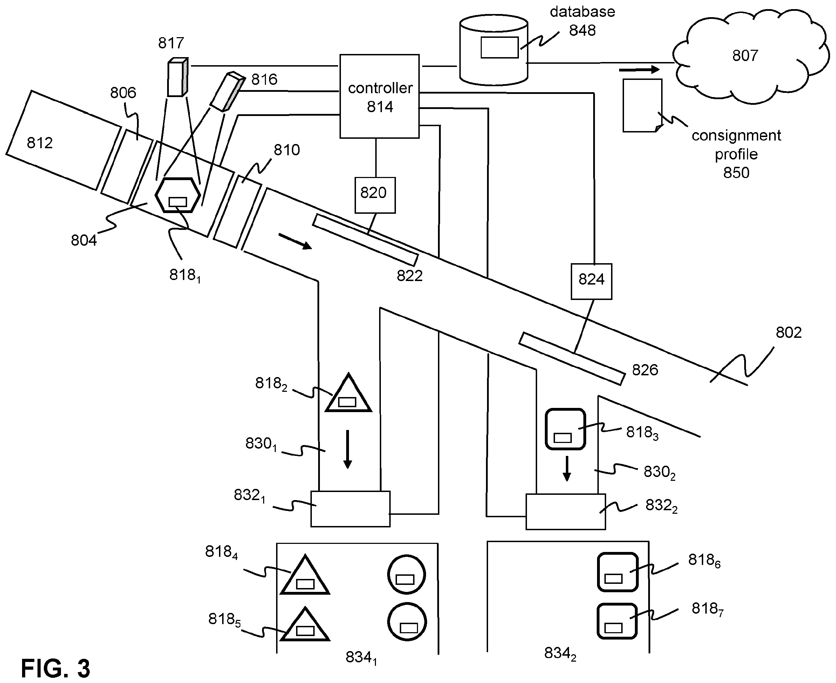

**Fig. 3** depicts a schematic of a scanning system for conveyable consignments according to an embodiment of the invention. In particular, **Fig. 3** shows a schematic representation of an exemplary embodiment of a scanning system which is integrated with a conveyor belt. The scanning system comprises a plurality of convey belts **802,804-806,810,812, 830_{1,2}** wherein at least one of the convey belts **804** is a scale belt, i.e. a belt that includes a scale. The scale belt may be located between an in-belt **812** and an out-belt **802** and may comprise an in-feeder belt **806,** a scale belt **804** and an outfeeder belt **810.** Weight measurements are performed by the scale belt **804.** A consignment may be provided via the in-feeder belt **806** onto the scale belt and when the consignment is moved above the scale, the belt may be shortly stopped so that the weight can be measured. Markings, e.g. a code representing the consignment ID and, and information about the destination location, are registered using a camera-based identification system **816** enabling reading markings from e.g. five sides (four sides, one top). Volume measurement is performed using a volume scanner **817** comprising lasers and mirrors enabling providing dimensioning data for both cuboid and non-cuboid objects. Software may be used, e.g. in computer system, to calculate a three-dimensional volume shape of the consignment as the smallest enclosing rectangular box in real time and may also be used to determine stackability of a consignment.

A scanning system controller **814** is connected to the belts, imaging apparatus **816** and volume scanner apparatus **817.** The controller is configured to control the belts (the infeed belt, the scale belt and the outfeed belt) such that consignments are fed onto the scale belt with the correct gaps in between to allow appropriate measurement of the weight and volume. The scanning system controller may be further connected to a database **848** for storing the measured consignment information. The controller may send the measured consignment information as a consignment profile **850** via the network **807** to the monitoring system of the PUD system (not shown).

A plurality of chutes **830_{1,2}** are connected laterally to a side of the main conveyor belt **802.** In an alternative arrangement chutes may also be provided at both sides of the main conveyor belt **802.** A chute is usually implemented as roller tables or slides forming a buffer for consignments collected for an associated destination. Each chute has an upstream end connecting to the main conveyor belt and a downstream end where consignments **818₁₋₇** can be loaded into cages or trucks **834_{1,2}.** The upstream ends of the chutes are within reach of ejectors **822,826** which can be moved by an electrometer **820** between a retracted position (ejector **822 in** **Fig. 3****)** and an ejecting position (ejector **826 in** **Fig. 3****).** When an ejector **822,826** is activated it moves from the retracted position to the ejecting position to move a passing consignment **818_{2,3}** from the main conveyer onto the respective chute.

The scanning system controller is connected to the ejectors and adapted to activate the ejectors when a predetermined consignment is passing by. Additionally, the controller has information including chute identifiers and associated destination information for each chute. Additionally, chutes are associated with information on the weight, volume and/or dimensions of the consignments. Hence, the scanning system controller scans each consignment that passes by and uses the measured consignment information, i.e. the consignment ID, the weight and the volume, in order to allocate a consignment to a predetermined chute that is associated with destination information and measured consignment information (e.g. max or min weight, max or min volume and/or max or min dimensions) that corresponds to that of the consignment (here the destination may also be the destination where the consignment should be transported or the next depot). When a consignment passes the chute to which it has been allocated, the scanning system controller will activate the respective ejector to move the consignment onto the chute.

At the downstream ends the chutes are provided with a terminal **832_{1,2}** where a cage or a truck can be logged on when the cage or truck is linked to the chute. The cage or truck can be logged off when the cage or truck is removed from the chute. The controller is programmed to receive the log-on and log-off data. Logging on includes input of a cage or truck identity and linking the cage or truck identity to a chute identity of the selected chute. The controller is also programmed to keep a record of consignment identities of consignment that have been moved onto selected chutes in a time period between logging on and logging off of the cage or truck.

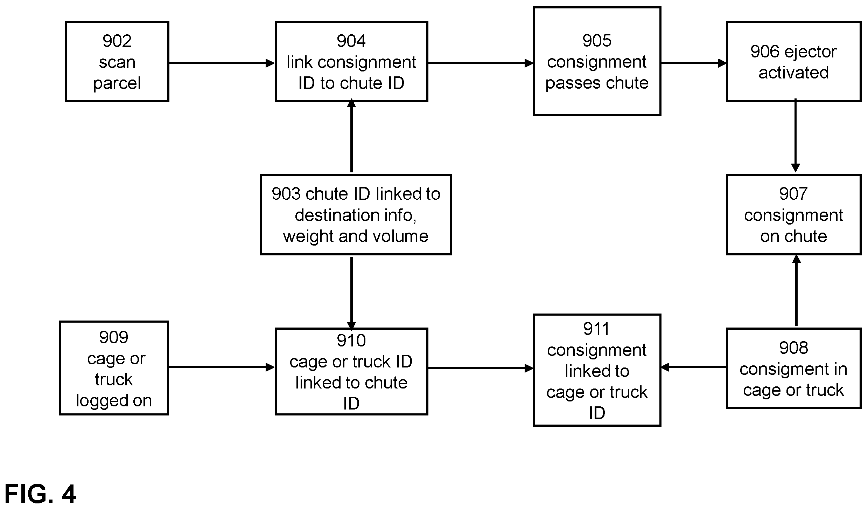

**Fig. 4** depicts a schematic of scanning process using a scanning system according to an embodiment of the invention. In particular, the flow chart of **Fig. 4** illustrates the individual steps of a method for sorting and handling consignments for transhipment using a scanning system. **Fig. 4** is explained with reference to the system of **Fig. 3****.**

Consignments are collected on the conveyer belt wherein each consignment is labelled with a unique scan-readable code, such as a barcode. In step **902** of **Fig. 4** the scanning system, including the scale belt, scans the consignments that pass by. During the scanning the weight, volume, dimensions and consignment ID are determined. The scanning system controller may store the measured consignment information in a database and send the information as a consignment profile (the physical status of the consignment at a predetermined time and location) to the monitoring system of the PUD system.

The controller has information on the chute identifiers and destination information for each chute. Additionally, the chutes are associated with weight, volume and/or dimensions of the consignments. For example, one chute may collect consignments within a predetermined range of weights and/or volumes. Hence, the chute identities are associated with destination information, weight, volume and dimensions (step **903**).

After scanning of a consignment, the controller links the consignment identity to a chute identity of a chute on the basis of destination, weight, volume and dimensions (step **904**). When the main conveyor belt is active, a consignment passes a selected chute 7 (step **905**) and the controller activates the ejector associated with the selected chute (step **906**). In response the ejector moves the consignment from the conveyer onto the chute (step **907**). The consignment is subsequently moved from the chute into a transportation means, e.g. a cage or a truck (step **908**).

When a cage or a truck is positioned at the downstream end of a chute, the cage or truck is configured to identify itself (log on) to the controller on the basis of an identifier (e.g. a cage identifier or a truck identifier) (step **909).** In response the controller links the cage or truck identity to a chute identity of the chute (step **910).** Subsequently for each consignment that is moved to the chute the controller links the consignment identity to the cage or truck identity (step **911**). This way the controller can determine which individual consignments are within a given cage or truck and to trace which cage or truck contains a given consignment. After a time period, e.g., after filling the cage or the truck, the cage is logged off with the controller and a new cage or truck can identify itself to the controller.

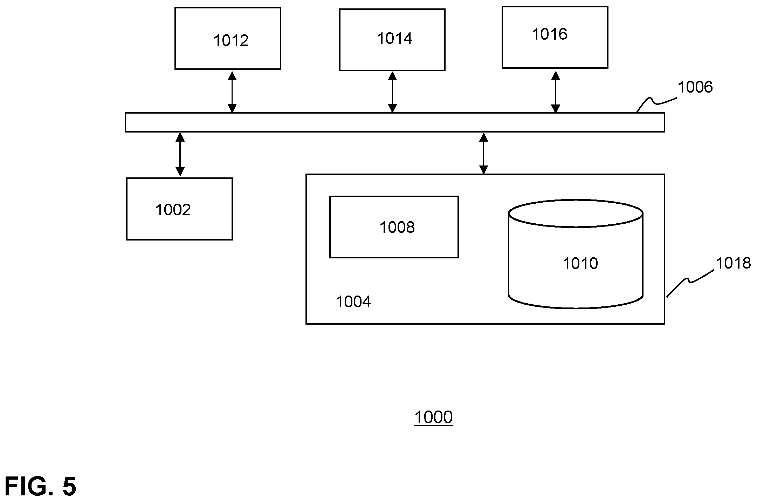

**Fig. 5** provides a schematic illustration of a data processing system **1000** operable to implement one or more aspects of the present invention. As shown, the system **1000** includes a block diagram illustrating an exemplary data processing system that may be used in as described in this disclosure. Data processing system **1000** may include at least one processor **1002** coupled to memory elements **1004** through a system bus **1006.** As such, the data processing system may store program code within memory elements **1004.** Further, processor **1002** may execute the program code accessed from memory elements **1004** via system bus **1006.** In one aspect, data processing system may be implemented as a computer that is suitable for storing and/or executing program code. It should be appreciated, however, that data processing system **1000** may be implemented in the form of any system including a processor and memory that is capable of performing the functions described within this specification.

Memory elements **1004** may include one or more physical memory devices such as, for example, local memory **1008** and one or more bulk storage devices **1010.** Local memory may refer to random access memory or other non-persistent memory device(s) generally used during actual execution of the program code. A bulk storage device may be implemented as a hard drive or other persistent data storage device. The processing system **1000** may also include one or more cache memories (not shown) that provide temporary storage of at least some program code in order to reduce the number of times program code must be retrieved from bulk storage device **1010** during execution.

Input/output (I/O) devices depicted as input device **1012** and output device **1014** optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter **1016** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system.

As pictured in **FIG. 5****,** memory elements **1004** may store an application **1018.** It should be appreciated that data processing system **1000** may further execute an operating system (not shown) that can facilitate execution of the application. Application, being implemented in the form of executable program code, can be executed by data processing system **1000,** e.g., by processor **1002.** Responsive to executing application, data processing system may be configured to perform one or more operations to be described herein in further detail.

It is to be understood that any feature described in relation to any one embodiment may be used alone, or in combination with other features described, and may also be used in combination with one or more features of any other of the embodiments, or any combination of any other of the embodiments. Moreover, the invention is not limited to the embodiments described above, which may be varied within the scope of the accompanying claims.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope as set out in the appended claims. The embodiment was chosen and described in order to best explain the principles of the invention and the practical application, and to enable others of ordinary skill in the art to understand the invention for various embodiments with various modifications as are suited to the particular use contemplated.

## Claims

1. A scanning system for routing consignments (818₁₋₇) in a consignment processing location on the basis of consignment information, the consignment information comprising a consignment ID, information about the destination location, measured weight and measured volume of a consignment, the system comprising:
a plurality of conveyer belts (802,804-806,810,812), wherein at least one of the conveyer belts is a scale belt (804) and another one of the conveyer belts is a main conveyer belt (802);
a series of chutes (830_{1,2}) associated with destination information, the chutes (830_{1,2}) connecting laterally to a side of the main conveyer belt (802), one or more of the chutes (830_{1,2}) being associated with information on the weight, volume and dimensions of consignments (818₁₋₇);
ejectors (822,826) arranged to move passing consignments from the main conveyer belt (802) onto associated chutes (830_{1,2});
a scanning system controller (814) connected to the conveyer belts (804,806,810), an imaging apparatus (816) and a volume scanner apparatus (817), and the ejectors (822,826);
wherein the scanning system controller (814) is configured to:
- register the consignment ID and information about the destination location using the imaging apparatus (816),
- weigh the consignment (818₁₋₇) using the scale belt (804),
- measure the consignment volume using the volume scanner apparatus (817);
- use the consignment ID, the information about the destination, the weight and the volume to allocate the consignment (818₁₋₇) to a predetermined chute (830_{1,2});
- when the consignment (818₁₋₇) passes the chute to which it has been allocated, activate the respective ejector (822,826) to move the consignment (818₁₋₇) onto the chute (830_{1,2}) ;
- store chute identities and associated destination information for each chute (830_{1,2});
wherein the chutes (830_{1,2}) are provided with a terminal where a cage or a truck (834_{1,2}) can be logged on when the cage or truck (834_{1,2}) is linked to the chute (830_{1,2}) and logged off when the cage or truck (834_{1,2}) is removed from the chute (830_{1,2}); and
wherein the scanning system controller (814) is programmed to receive the log-on and log-off data; and
wherein logging on includes input of a cage or truck identity and linking the cage or truck identity to a chute identity of the selected chute (830_{1,2});
and wherein the scanning system controller (814) is programmed to keep record of consignment identities of consignments (818₁₋₇) that have been moved onto selected chutes (830_{1,2}) in a time period between logging on and logging off of the cage or truck (834_{1,2}).

2. System according to claim 1, wherein the cage or truck (834_{1,2}) is provided with a scan readable code coding the cage or truck identity and wherein logging on the cage or truck (834_{1,2}) involves scanning the code and communicating the cage or truck identity to the scanning system controller (814).

3. System according to claim 2, wherein the code is a bar code, a QR code or a RFID tag.

4. System according to any preceding claim, wherein the number, weight and/or joint volume of all consignments (818₁₋₇) assigned to a given chute (830_{1,2}) during the time that a given cage or truck (834_{1,2}) is logged-in is determined and compared with the number or weight of the collected consignments in the cage or truck (834_{1,2}) after the cage or truck (834_{1,2}) has been logged out or with the maximum total loading volume of the cage or truck (834_{1,2}) to determine the identity of the consignments left on the chute (830_{1,2}) after the cage or truck (834_{1,2}) was logged-off.

5. System according to any preceding claim, wherein a marker is used to indicate whether or not a cage or truck (834_{1,2}) is logged-in.

## Patentansprüche

1. Scanningsystem zum Routen von Sendungen (818₁₋₇) in einem Sendungsverarbeitungslager auf der Grundlage von Sendungsinformationen, wobei die Sendungsinformationen eine Sendungs-ID, Informationen über den Zielort, gemessenes Gewicht und gemessenes Volumen einer Sendung umfassen, wobei das System umfasst:
eine Mehrzahl von Förderbändern (802, 804-806, 810, 812), wobei mindestens eines der Förderbänder ein Waageband (804) und ein weiteres der Förderbänder ein Hauptförderband (802) ist;
eine Reihe von Rutschen (830_{1,2}), die mit Zielinformationen verknüpft sind, wobei die Rutschen (830_{1,2}) seitlich mit einer Seite des Hauptförderbands (802) verbunden sind, wobei eine oder mehrere der Rutschen (830_{1,2}) mit Informationen über das Gewicht, das Volumen und die Abmessungen von Sendungen (818₁₋₇) verknüpft sind;
Auswerfer (822, 826), die angeordnet sind, um vorbeilaufende Sendungen vom Hauptförderband (802) auf zugeordnete Rutschen (830_{1,2}) zu bewegen;
einen Scanningsystem-Controller (814), der verbunden ist mit den Förderbändern (804, 806, 810), einer Bildgebungsvorrichtung (816) und einer Volumenscannervorrichtung (817) sowie den Auswerfern (822 ,826);
wobei der Scanningsystem-Controller (814) konfiguriert ist, um:
- die Sendungs-ID und Informationen über den Zielort unter Verwendung der Bildgebungsvorrichtung (816) zu registrieren,
- die Sendung (818₁₋₇) unter Verwendung des Waagebands (804) zu wiegen,
- das Sendungsvolumen unter Verwendung der Volumenscannervorrichtung (817) zu messen,
- die Sendungs-ID, die Informationen über den Zielort, das Gewicht und das Volumen zu verwenden, um die Sendung (818₁₋₇) einer vorbestimmten Rutsche (830_{1,2}) zuzuordnen,
- wenn die Sendung (818₁₋₇) an der Rutsche vorbeiläuft, der sie zugeordnet wurde, den jeweiligen Auswerfer (822, 826) zu aktivieren, um die Sendung (818₁₋₇) auf die Rutsche (830_{1,2}) zu bewegen;
- Rutschenidentitäten und zugeordnete Zielinformationen für jede Rutsche (830_{1,2}) zu speichern;
wobei die Rutschen (830_{1,2}) mit einem Terminal versehen sind, an dem ein Käfig oder ein LKW (834_{1,2}) angemeldet werden kann, wenn der Käfig oder LKW (834_{1,2}) mit der Rutsche (830_{1,2}) verknüpft ist und abgemeldet wird, wenn der Käfig oder LKW (834_{1,2}) von der Rutsche (830_{1,2}) entfernt wird; und
wobei der Scanningsystem-Controller (814) programmiert ist, um die Anmeldedaten und Abmeldedaten zu empfangen; und
wobei die Anmeldung die Eingabe einer Käfig- oder LKW-Identität und die Verknüpfung der Käfig- oder LKW-Identität mit einer Rutschenidentität der ausgewählten Rutsche (830_{1,2}) umfasst;
und wobei der Scanningsystem-Controller (814) programmiert ist, Aufzeichnungen über Sendungsidentitäten von Sendungen (818₁₋₇) zu führen, die in einem Zeitraum zwischen der Anmeldung und Abmeldung des Käfigs oder LKWs (834_{1,2}) auf ausgewählte Rutschen (830_{1,2}) bewegt wurden.

2. System nach Anspruch 1, wobei der Käfig oder LKW (834_{1,2}) mit einem scan-lesbaren Code versehen ist, der die Käfig- oder LKW-Identität codiert, und wobei die Anmeldung des Käfigs oder LKWs (834_{1,2}) das Scannen des Codes und die Übermittlung der Käfig- oder LKW-Identität an den Scanningsystem-Controller (814) umfasst.

3. System nach Anspruch 2, wobei der Code ein Barcode, ein QR-Code oder ein RFID-Tag ist.

4. System nach einem der vorhergehenden Ansprüche, wobei die Anzahl, das Gewicht und/oder das Gesamtvolumen aller Sendungen (818₁₋₇), die einer gegebenen Rutsche (830_{1,2}) während der Zeit zugeordnet sind, in der ein gegebener Käfig oder LKW (834_{1,2}) angemeldet ist, bestimmt und verglichen wird mit der Anzahl oder dem Gewicht der gesammelten Sendungen im Käfig oder LKW (834_{1,2}), nachdem der Käfig oder LKW (834_{1,2}) abgemeldet wurde, oder mit dem maximalen Gesamtladevolumen des Käfigs oder LKWs (834_{1,2}), um die Identität der auf der Rutsche (830_{1,2}) zurückgelassenen Sendungen zu bestimmen, nachdem der Käfig oder LKW (834_{1,2}) abgemeldet wurde.

5. System nach einem der vorhergehenden Ansprüche, wobei ein Marker verwendet wird, um anzuzeigen, ob ein Käfig oder LKW (834_{1,2}) angemeldet ist oder nicht.

## Revendications

1. Système de balayage pour le routage des envois (818₁₋₇) dans un lieu de traitement d'envois, sur la base d'informations d'envoi, les informations d'envoi comprenant un identifiant d'envoi, d'informations concernant le lieu de destination, un poids mesuré et un volume mesuré d'un envoi, le système comprenant :
une pluralité de bandes transporteuses (802, 804-806, 810, 812), dans lequel au moins une des bandes transporteuses est une bande de pesée (804) et une autre des bandes transporteuses est une bande transporteuse principale (802) ;
une série de goulottes (830_{1,2}) associées à des informations de destination, les goulottes (830_{1,2}) se connectant latéralement à un côté de la bande transporteuse principale (802), une ou plusieurs des goulottes (830_{1,2}) étant associées à des informations sur le poids, le volume et les dimensions des envois (818₁₋₇) ;
des éjecteurs (822, 826) disposés pour déplacer les envois passants de la bande transporteuse principale (802) vers des goulottes associées (830_{1,2}) ;
un dispositif de commande de système de balayage (814) connecté aux bandes transporteuses (804, 806, 810), à un appareil d'imagerie (816) et à un appareil de balayage volumétrique (817), et aux éjecteurs (822, 826) ;
dans lequel le dispositif de commande de système de balayage (814) est configuré pour :
- enregistrer l'identifiant d'envoi et les informations concernant le lieu de destination en utilisant l'appareil d'imagerie (816),
- peser l'envoi (818₁₋₇) en utilisant la bande de pesée (804),
- mesurer le volume d'envoi en utilisant l'appareil de balayage de volume (817) ;
- utiliser l'identifiant d'envoi, les informations concernant la destination, le poids et le volume pour attribuer l'envoi (818₁₋₇) à une goulotte prédéterminée (830_{1,2}) ;
- lorsque l'envoi (818₁₋₇) passe devant la goulotte à laquelle il a été attribué, activer l'éjecteur respectif (822, 826) pour déplacer l'envoi (818₁₋₇) vers la goulotte (830_{1,2}) ;
- stocker des identités de goulottes et des informations de destination associées pour chaque goulotte (830_{1,2}) ;
dans lequel les goulottes (830_{1,2}) sont équipées d'un terminal où une cage ou un camion (834_{1,2}) peut être connecté lorsque la cage ou le camion (834_{1,2}) est lié à la goulotte (830_{1,2}) et déconnecté lorsque la cage ou le camion (834_{1,2}) est retiré de la goulotte (830_{1,2}) ; et
dans lequel le dispositif de commande de système de balayage (814) est programmé pour recevoir les données de connexion et de déconnexion ; et
dans lequel la connexion inclut la saisie d'une identité de cage ou de camion et la liaison de l'identité de cage ou de camion à une identité de goulotte de la goulotte sélectionnée (830_{1,2}) ;
et dans lequel le dispositif de commande de système de balayage (814) est programmé pour conserver un enregistrement d'identités d'envois (818₁₋₇) qui ont été déplacés sur des goulottes sélectionnées (830_{1,2}) pendant une période de temps entre la connexion et la déconnexion de la cage ou du camion (834_{1,2}).

2. Système selon la revendication 1, dans lequel la cage ou le camion (834_{1,2}) est équipé d'un code lisible par balayage codant l'identité de cage ou de camion et dans lequel la connexion de la cage ou du camion (834_{1,2}) implique le balayage du code et la transmission de l'identité de cage ou de camion au dispositif de commande de système de balayage (814).

3. Système selon la revendication 2, dans lequel le code est un code-barres, un code QR ou une étiquette RFID.

4. Système selon quelconque revendication précédente, dans lequel le nombre, le poids et/ou le volume conjoint de tous les envois (818₁₋₇) attribués à une goulotte donnée (830_{1,2}) pendant le temps où une cage ou un camion donné (834_{1,2}) est connecté est déterminé et comparé au nombre ou au poids des envois collectés dans la cage ou le camion (834_{1,2}) après que la cage ou le camion (834_{1,2}) a été déconnecté ou au volume de chargement total maximal de la cage ou du camion (834_{1,2}) afin de déterminer l'identité des envois laissés sur la goulotte (830_{1,2}) après la déconnexion de la cage ou du camion (834_{1,2}).

5. Système selon quelconque revendication précédente, dans lequel un marqueur est utilisé pour indiquer si une cage ou un camion (834_{1,2}) est connecté.
